# EUROPÄISCHE PATENTSCHRIFT

(11) **EP 3 438 630 B1**
(45) Veröffentlichungstag und Bekanntmachung des Hinweises auf die Patenterteilung: **27.10.2021**
(21) Anmeldenummer: 18186896.9
(22) Anmeldetag: 01.08.2018
(51) Int. Cl.: G01M 17/007, G01L 1/26, G01L 19/00

(54) **PRÜFSTAND FÜR KRAFTFAHRZEUGE MIT DEHNUNGSSENSOR**
TEST BENCH FOR MOTOR VEHICLES WITH STRAIN SENSOR
BANC D'ESSAI POUR VÉHICULES À MOTEUR AVEC CAPTEUR DE CONTRAINTE

(30) Priorität: 03.08.2017 DE 102017117649
(43) Veröffentlichungstag der Anmeldung: 06.02.2019
(73) Patentinhaber: Cartesy GmbH, 84453 Mühldorf Bayern (DE)
(72) Erfinder: FEMBÖCK, Josef, 84524 Neuötting Bayern (DE)
(74) Vertreter: Lichtnecker, Markus Christoph

(56) Entgegenhaltungen:
- EP-A1- 0 670 479
- DE-A1- 19 947 733
- DE-B3-102004 025 828
- US-A- 5 048 343
- US-A1- 2010 174 576

## Beschreibung

Die Erfindung betrifft einen Prüfstand mit einer Prüfrolle für Kraftfahrzeuge, bei dem Kräfte gemessen werden, welche beim Beschleunigen sowie beim Bremsen auf die Radaufstandsflächen der Reifen wirken, mit einem Dehnungssensor, umfassend wenigstens ein Sensorelement zur Ermittlung der Kräfte und eine Auswertevorrichtung zur Verarbeitung der Kräfte.

Derartige Dehnungssensoren sind grundsätzlich bekannt und werden beispielsweise in Kraftmessdosen oder Wägezellen eingesetzt.

DE 199 47 733 A1, US 2010/0174576 A1, US 5,048,343 A und EP 0 670 479 A1 offenbaren jeweils Vorrichtungen mit einem Sensorelement zur Ermittlung von Kräften und einer Auswertevorrichtung zur Verarbeitung und/oder Weitergabe der Kräfte sowie wenigstens einer zusätzlichen Information. Bei EP 0 670 479 A1 entspricht die zusätzliche Information der Temperatur. Ein Schlupfsensor und/oder Drehzahlmesser ist hingegen nicht vorgesehen.

DE 10 2004 025 828 B3 offenbart einen Prüfstand für ein Kraftfahrzeug mit einer Laufrolle oder Lauftrommel sowie einem Kraftmesser.

Nachteilig an herkömmlichen Dehnungssensoren ist, dass diese lediglich die Kraft bzw. das Gewicht bestimmen können und meist keine weitere Funktion aufweisen. Werden neben den Dehnungssensoren weitere Sensoren, z.B. zur Bestimmung der Temperatur, eingesetzt, werden die jeweiligen Daten in separaten Auswertevorrichtungen mit eigenen Verkabelungen ausgewertet.

Die zusätzlichen Auswertevorrichtungen sowie Verkabelungen benötigen zusätzlichen Platz.

Es ist daher eine Aufgabe der Erfindung, einen Prüfstand mit einem platzsparenden, multifunktionalen Dehnungssensor sowie ein einfaches, multifunktionales Verfahren zum Verarbeiten und/oder Weitergeben von Informationen zu schaffen.

Die Lösung dieser Aufgabe erfolgt durch den Prüfstand, die Verwendung, sowie durch das Verfahren der unabhängigen Ansprüche.

Erfindungsgemäß ist die Auswertevorrichtung dazu ausgebildet, neben der durch das Sensorelement gemessenen Kraft wenigstens eine zusätzliche Information zu verarbeiten.

Die Auswertevorrichtung ist in den Dehnungssensor integriert.

Erfindungsgemäß wird die Kraft ermittelt, die beim Beschleunigen und/oder Bremsen auf die Radaufstandsflächen der Reifen wirken.

Von der Auswertevorrichtung können optional Rohdaten bzw. Rohinformationen weitergegeben werden. Erfindungsgemäß werden die Daten bzw. Informationen von der Auswertevorrichtung jedoch zumindest vorverarbeitet, ehe diese weitergegeben werden. So kann beispielsweise ein verrechnetes Signal ausgegeben werden.

Vorzugsweise werden die Rohdaten bzw. Rohinformationen kontinuierlich, insbesondere permanent, ausgewertet.

Da die Auswertevorrichtung in den Dehnungssensor integriert ist, wird eine kompakte Bauweise ermöglicht. Der Dehnungssensor kann - je nach Ausführungsform - beispielsweise auch lediglich einen Durchmesser von maximal 20 mm, vorzugsweise 15 mm, 12 mm oder 10 mm aufweisen. Werden große Kräfte und Lasten gemessen, kann der Dehnungssensor jedoch auch deutlich größer ausgebildet sein.

Vorzugsweise ist die Auswertevorrichtung als Recheneinheit ausgebildet und kann die erhaltenen Daten und Informationen verarbeiten.

Der Dehnungssensor ist multifunktional, da dieser nicht nur die Kräfte ermittelt, sondern zudem auch weitere Information verarbeitet.

Es war überraschend, dass ein Dehnungssensor auch weitere Funktionen erfüllen kann. Insbesondere handelt es sich um einen intelligenten Dehnungssensor.

Die zusätzliche Information betrifft ein Schlupfsignal eines Schlupfsensors, der an der Prüfrolle angeordnet ist, und/oder eine Drehzahl eines Drehzahlmessers, der an der Prüfrolle angeordnet ist.

Der Dehnungssensor ist als Sensorknoten ausgebildet. Mehrere dieser Sensorknoten sind zu einem Sensornetz verknüpft.

Die Sensorknoten können drahtlos oder drahtgebunden, z.B. über ein Bus-System, miteinander vernetzt sein.

Die Daten sämtlicher Sensorknoten können insbesondere an eine zentrale Überwachungsvorrichtung geleitet werden. Die zentrale Überwachungsvorrichtung kann die Daten dann anzeigen und/oder auswerten. Auch kann eine Steuerung anhand der, ggf. ausgewerteten, Daten und/oder Informationen erfolgen. Weiterbildungen der Erfindung sind auch den abhängigen Ansprüchen, der Beschreibung sowie den beigefügten Zeichnungen zu entnehmen.

Nach einer Ausführungsform umfasst das Sensorelement einen Dehnungsmessstreifen. Insbesondere umfasst der Dehnungssensor eine Anordnung aus Dehnungsmessstreifen. Es können vorzugsweise mehrere, z.B. zwei oder vier, Dehnungsmessstreifen vorgesehen sein. Beispielsweise können mehrere Dehnungsmessstreifen eine Halbbrücke oder Vollbrücke bilden. Bevorzugt umfasst der Dehnungssensor zwei Vollbrücken. Die Messgenauigkeit wird dadurch erhöht.

Gemäß einer weiteren Ausführungsform betrifft eine weitere zusätzliche Information einen Schalterzustand, eine Temperatur, eine Geschwindigkeit, Positionsdaten, ein Radarsignal, eine Zeit, eine Spannung, einen Strom und/oder zusätzliche Kraft- und/oder Gewichtsdaten.

Es kann somit beispielsweise ein zusätzlicher Schalter und/oder Sensor vorgesehen sein, dessen Daten ebenfalls im Dehnungssensor ausgewertet werden.

Bei dem Schalter kann es sich z.B. um einen Anfahrtsschalter eines Prüfstands handeln. Der Anfahrtsschalter kann insbesondere als Sicherheitsmechanismus dienen, wobei der Prüfstand beispielsweise nur dann anfahren kann, wenn der Anfahrtsschalter betätigt wurde.

Auch kann es sich bei dem Schalter um einen Näherungsschalter handeln. Es können auch mehrere Schalter vorgesehen sein, beispielsweise drei Näherungsschalter.

Bei dem zusätzlichen Sensor kann es sich insbesondere um einen Temperatursensor, einen Geschwindigkeitssensor, einen Positionssensor, ein Radar, einen Zeitmesser, einen Spannungsmesser, einen Strommesser, ein Potentiometer und/oder einen zusätzlichen Kraft- und/oder Gewichtssensor handeln.

Die zusätzlichen Schalter und/oder Sensoren können vorzugsweise im oder am Dehnungssensor angeordnet sein. Alternativ können diese auch vom Dehnungssensor beabstandet sein und lediglich die Informationen an den Dehnungssensor übertragen. Die Übertragung kann kabelgebunden oder kabellos erfolgen. Bei einer kabellosen Übertragung kann der Dehnungssensor eine Empfangsvorrichtung aufweisen.

Nach einer weiteren Ausführungsform ist zumindest ein Dateneingang für die zusätzliche Information vorgesehen. Vorzugsweise können mehrere Dateneingänge vorhanden sein. Der Dateneingang kann analog oder digital ausgebildet sein.

Informationen aus den Schaltern und/oder Sensoren können über den Dateneingang in den Dehnungssensor, insbesondere in die Auswertevorrichtung des Dehnungssensors, geleitet werden.

Gemäß einer weiteren Ausführungsform umfasst der Dehnungssensor einen gemeinsamen Datenausgang für die Kräfte sowie für auf der zusätzlichen Information basierende Zusatzdaten.

Die Kräfte können als Rohdaten, z.B. Dehnungsdaten, ausgegeben werden. Alternativ oder zusätzlich können diese Rohdaten auch zumindest teilweise bereits verarbeitet sein, sodass z.B. Kräfte oder Gewichte ausgegeben werden.

Bei den Zusatzdaten kann es sich beispielsweise um Rohdaten, z.B. Temperaturdaten, handeln, wie sie von zusätzlichen Schaltern bzw. Sensoren ermittelt wurden. Alternativ kann es sich bei den Zusatzdaten um, zumindest teilweise, verarbeitete Daten handeln. In den Zusatzdaten können aus verschiedenen zusätzlichen Informationen ermittelte Parameter enthalten sein. Auch können die Parameter aus zusätzlichen Informationen und den Kräften ermittelt worden sein.

Insbesondere ist lediglich ein einziges Signalkabel für alle Daten und Zusatzdaten vorgesehen. Kabel können dadurch eigespart werden, wodurch auch eine kleine Bauweise ermöglicht wird. Zudem erhöht sich dadurch die Benutzerfreundlichkeit.

Vorzugsweise kann es sich bei dem Signalkabel um einen Bus handeln. Der Dehnungssensor kann somit insbesondere an ein Bus-System angeschlossen und in ein Netzwerk integriert werden bzw. sein.

Alternativ kann der Datenausgang auch kabellos ausgebildet sein. Bei einer kabellosen Übertragung kann der Dehnungssensor eine Sendevorrichtung aufweisen. Die Übertragung kann insbesondere mittels mobiler Übertragungstechniken wie UMTS, GSM, LTE, 5G, Bluetooth, Infrarot, WLAN oder dergleichen erfolgen.

Nach einer weiteren Ausführungsform ermittelt die Auswertevorrichtung Parameter aus den Kräften sowie der zusätzlichen Information. Verschiedene Daten und Informationen, welche in der Auswertevorrichtung zusammenfließen, können verwendet werden, um weitere Parameter zu bestimmen. Beispielsweise kann aus der Kraft und der Drehzahl eine Leistung berechnet und ausgegeben werden. Auch können Kraftprofile gefahren werden, welche beispielsweise von der Zeit, der Strecke, der Geschwindigkeit und/oder der Temperatur abhängen können.

Gemäß einer weiteren Ausführungsform kann die Auswertevorrichtung Parameter aus mehreren zusätzlichen Informationen ermitteln. Verschiedene Informationen, welche in der Auswertevorrichtung zusammenfließen, können verwendet werden, um weitere Parameter zu bestimmen. Beispielsweise kann ein Schlupf bei der ausgegebenen Geschwindigkeit berücksichtigt werden.

Nach einer weiteren Ausführungsform ist eine Steuerungsvorrichtung vorgesehen. Es kann folglich eine Steuerung anhand von, insbesondere verarbeiteten, Daten und/oder Informationen erfolgen. Der Dehnungssensor kann vorzugsweise als Sensor/Aktor-Knoten ausgebildet sein. Auch die Steuersignale können insbesondere am Datenausgang ausgegeben werden.

Die Erfindung betrifft einen Prüfstand für Kraftfahrzeuge, mit einem erfindungsgemäßen Dehnungssensor.

Bei Rollenprüfständen, für Kraftfahrzeuge werden Kräfte gemessen, welche beim Beschleunigen sowie beim Bremsen, d.h. bei einer negativen Beschleunigung, auf die Radaufstandsflächen der Reifen wirken.

Der Prüfstand kann beispielsweise eine Tastrolle umfassen, welche mit einem Anfahrtsschalter verbunden ist. Erst wenn die Tastrolle nach unten gedrückt ist, wird der Prüfstand angefahren.

An der Prüfrolle ist ein Drehzahlsensor und/oder ein Schlupfsensor und optional ein Geschwindigkeitssensor angeordnet.

Die Informationen dieser Schalter und/oder Sensoren werden in der Auswertevorrichtung des Dehnungssensor verarbeitet.

Die Erfindung betrifft auch ein Verfahren zur Ermittlung, Verarbeitung und/oder Weitergabe von Informationen in einem erfindungsgemäßen Prüfstand.

Wenigstens ein Sensorelement eines Dehnungssensors eines Prüfstands für Kraftfahrzeuge ermittelt Kräfte. Eine Auswertevorrichtung des Dehnungssensors verarbeitet die Kräfte sowie wenigstens eine zusätzliche Information und gibt diese optional weiter.

Insbesondere kann die Auswertevorrichtung Parameter aus den Kräften sowie der zusätzlichen Information ermitteln. Alternativ oder zusätzlich kann die Auswertevorrichtung Parameter aus mehreren zusätzlichen Informationen ermittelt.

Anhand der verarbeiteten Daten und/oder Informationen kann eine Steuerung erfolgen. Beispielsweise können Komponenten eines Prüfstands durch eine Steuerungsvorrichtung des Dehnungssensors gesteuert werden.

Alle hier beschriebenen Ausführungsformen und Bauteile der Vorrichtungen sind insbesondere dazu ausgebildet, z.B. mittels einer Steuerungsvorrichtung, nach dem hier beschriebenen Verfahren betrieben zu werden. Ferner können alle hier beschriebenen Ausführungsformen der Vorrichtungen sowie alle hier beschriebenen Ausführungsformen des Verfahrens jeweils miteinander kombiniert werden, insbesondere auch losgelöst von der konkreten Ausgestaltung, in deren Zusammenhang sie erwähnt werden.

Die Erfindung wird im Folgenden beispielhaft unter Bezugnahme auf die Zeichnung beschrieben. Es zeigt:

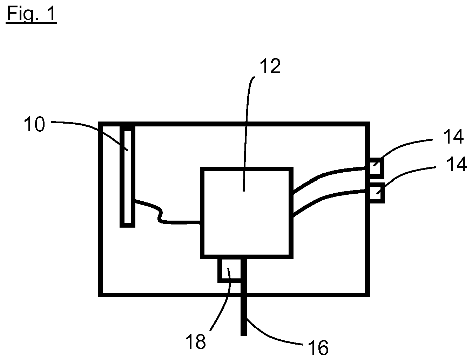

- Fig. 1: eine schematische Darstellung einer Ausführungsform eines erfindungsgemäßen Dehnungssensors.

Zunächst ist zu bemerken, dass die dargestellte Ausführungsform rein beispielhafter Natur ist. So können auch mehrere Sensorelemente vorgesehen ein. Insbesondere ist auch die Steuerungsvorrichtung rein optional.

Fig. 1 zeigt einen Dehnungssensor mit einem als Dehnungsmessstreifen 10 ausgebildeten Sensorelement, mit dem Kräfte bestimmt werden können.

Eine Auswertevorrichtung 12 kann die Kräfte sowie weitere Informationen verarbeiten bzw. optional weitergeben.

Die weiteren Informationen können über Dateneingänge 14 zur Auswertevorrichtung 12 gelangen. Die Informationen können aus nicht dargestellten Schaltern und/oder Sensoren stammen.

Über ein als Kabel 16 ausgebildeten Datenausgang ist die Auswertevorrichtung 12 mit einem nicht dargestellten Bus-System verbunden. Dadurch, dass ein gemeinsamer Datenausgang 16 vorgesehen ist, können Kabel eingespart werden.

Optional kann eine Steuerungsvorrichtung 18 vorgesehen sein, welche Steuerungssignale ausgeben kann. Die Steuerungssignale können auf den ausgewerteten Kräften bzw. zusätzlichen Informationen beruhen. Auch die Steuerungssignale können über den Datenausgang 16 ausgegeben werden.

Der Dehnungssensor kann folglich als intelligenter Sensor/Aktor-Knoten ausgebildet sein.

Der Dehnungssensor ermöglicht eine kompakte Bauweise und weist im Vergleich zu herkömmlichen Dehnungssensoren zusätzliche Funktionen auf.

### Bezugszeichenliste

- 10: Dehnungsmessstreifen, Sensorelement
- 12: Auswertevorrichtung
- 14: Dateneingang
- 16: Kabel, Datenausgang
- 18: Steuerungsvorrichtung

## Patentansprüche

1. Prüfstand für Kraftfahrzeuge, bei dem Kräfte gemessen werden, welche beim Beschleunigen sowie beim Bremsen auf die Radaufstandsflächen der Reifen wirken, mit
einer Prüfrolle,
einem an der Prüfrolle angeordneten Schlupfsensor und/oder Drehzahlmesser, und
einem Dehnungssensor,
wobei der Dehnungssensor wenigstens ein Sensorelement (10) zur Messung der Kräfte, und
eine Auswertevorrichtung (12) zur Verarbeitung der gemessenen Kräfte sowie wenigstens einer zusätzlichen Information umfasst, wobei die zusätzliche Information ein Schlupfsignal des Schlupfsensors und/oder eine Drehzahl des Drehzahlmessers betrifft, wobei die Auswertevorrichtung (12) in den Dehnungssensor integriert ist, und wobei
der Dehnungssensor als ein Sensorknoten eines Sensornetzes mehrerer miteinander vernetzter Sensorknoten ausgebildet ist.

2. Prüfstand nach Anspruch 1,
**dadurch gekennzeichnet,**
**dass** das Sensorelement einen Dehnungsmessstreifen (10) umfasst.

3. Prüfstand nach Anspruch 1 oder 2,
**dadurch gekennzeichnet,**
**dass** der Dehnungssensor einen Durchmesser von maximal 20 mm aufweist.

4. Prüfstand nach einem der vorhergehenden Ansprüche,
**dadurch gekennzeichnet,**
**dass** eine weitere zusätzliche Information einen Schalterzustand, eine Temperatur, eine Geschwindigkeit, Positionsdaten, ein Radarsignal, eine Zeit, eine Spannung, einen Strom und/oder zusätzliche Kraft- und/oder Gewichtsdaten betrifft.

5. Prüfstand nach einem der vorhergehenden Ansprüche,
**dadurch gekennzeichnet,**
**dass** am Dehnungssensor zumindest ein Dateneingang (14), vorzugsweise mehrere Dateneingänge (14), für die zusätzliche Information vorgesehen ist/sind.

6. Prüfstand nach einem der vorhergehenden Ansprüche,
**dadurch gekennzeichnet,**
**dass** der Dehnungssensor einen gemeinsamen Datenausgang (16) für die gemessenen Kräfte sowie für auf der zusätzlichen Information basierende Zusatzdaten umfasst.

7. Prüfstand nach einem der vorhergehenden Ansprüche,
**dadurch gekennzeichnet,**
**dass** die Auswertevorrichtung (12) Parameter aus den gemessenen Kräften sowie der zusätzlichen Information ermittelt.

8. Prüfstand nach einem der vorhergehenden Ansprüche,
**dadurch gekennzeichnet,**
**dass** die Auswertevorrichtung (12) Parameter aus mehreren zusätzlichen Informationen ermittelt.

9. Prüfstand nach einem der vorhergehenden Ansprüche,
**dadurch gekennzeichnet,**
**dass** eine Steuerungsvorrichtung (18) im Dehnungssensor vorgesehen ist.

10. Verwendung eines Dehnungssensors bei einem Prüfstand für Kraftfahrzeuge, bei dem die Kräfte gemessen werden, welche beim Beschleunigen sowie beim Bremsen auf die Radaufstandsflächen der Reifen wirken, umfassend
wenigstens ein Sensorelement (10) zur Messung der Kräfte, und
eine Auswertevorrichtung (12) zur Verarbeitung der gemessenen Kräfte sowie wenigstens einer zusätzlichen Information, wobei
der Prüfstand eine Prüfrolle und einem an der Prüfrolle angeordneten Schlupfsensor und/oder Drehzahlmesser aufweist, wobei die zusätzliche Information ein Schlupfsignal des Schlupfsensors und/oder eine Drehzahl des Drehzahlmessers betrifft, wobei
die Auswertevorrichtung (12) in den Dehnungssensor integriert ist, und wobei
der Dehnungssensor als ein Sensorknoten eines Sensornetzes mehrerer miteinander vernetzter Sensorknoten ausgebildet ist.

11. Verfahren zur Ermittlung, Verarbeitung und/oder Weitergabe von Informationen in einem Prüfstand nach einem der Ansprüche 1 bis 9.

## Claims

1. Test stand for motor vehicles, in which forces acting on the contact patches of the tyres during acceleration as well as during braking are measured, comprising
a test roller,
a slip sensor and/or tachometer arranged on the test roller, and
a strain sensor,
wherein the strain sensor comprises at least one sensor element (10) for measuring the forces, and
an evaluation device (12) for processing the measured forces and at least one additional item of information, wherein the additional item of information relates to a slip signal of the slip sensor and/or a rotational speed of the tachometer, wherein the evaluation device (12) is integrated into the strain sensor, and wherein
the strain sensor is designed as a sensor node of a sensor network of a plurality of interlinked sensor nodes.

2. Test stand according to claim 1,
**characterised in that**
the sensor element comprises a strain gauge (10).

3. Test stand according to claim 1 or 2,
**characterised in that**
the strain sensor has a diameter of at most 20 mm.

4. Test stand according to any of the preceding claims,
**characterised in that**
a further additional item of information relates to a switch state, a temperature, a speed, position data, a radar signal, a time, a voltage, a current and/or additional force and/or weight data.

5. Test stand according to any of the preceding claims,
**characterised in that**
at least one data input (14), preferably several data inputs (14) for the additional information, is/are provided at the strain sensor.

6. Test stand according to any of the preceding claims,
**characterised in that**
the strain sensor comprises a common data output (16) for the measured forces as well as for additional data based on the additional item of information.

7. Test stand according to any of the preceding claims,
**characterised in that**
the evaluation device (12) determines parameters from the measured forces as well as from the additional item of information.

8. Test stand according to any of the preceding claims,
**characterised in that**
the evaluation device (12) determines parameters from a plurality of additional items of information.

9. Test stand according to any of the preceding claims,
**characterised in that**
a control device (18) is provided in the strain sensor.

10. Use of a strain sensor in a test stand for motor vehicles, in which the forces acting on the contact patches of the tyres during acceleration as well as during braking are measured, comprising at least one sensor element (10) for measuring the forces, and an evaluation device (12) for processing the measured forces and at least one additional item of information, wherein
the test stand has a test roller and a slip sensor and/or tachometer disposed on the test roller, wherein
the additional item of information relates to a slip signal of the slip sensor and/or a rotational speed of the tachometer, wherein
the evaluation device (12) is integrated into the strain sensor, and wherein
the strain sensor is designed as a sensor node of a sensor network of a plurality of interlinked sensor nodes.

11. Method for determining, processing and/or transmitting information in a test stand according to any of claims 1 to 9.

## Revendications

1. Banc d'essai pour véhicules automobiles, permettant de mesurer les forces qui agissent sur les surfaces de contact au sol des pneus pendant l'accélération et le freinage, comportant
un rouleau d'essai,
un capteur de patinage et/ou un tachymètre disposé sur le rouleau d'essai, et un capteur de contrainte,
le capteur de contrainte comprenant au moins un élément capteur (10) pour mesurer les forces et un dispositif d'évaluation (12) pour évaluer les forces mesurées et au moins une information supplémentaire,
l'information supplémentaire concernant un signal de patinage du capteur de patinage et/ou une vitesse de rotation du tachymètre,
le dispositif d'évaluation (12) étant intégré dans le capteur de contrainte, et
le capteur de contrainte étant réalisé sous la forme d'un nœud de capteur d'un réseau de capteurs de plusieurs nœuds de capteur interconnectés.

2. Banc d'essai selon la revendication 1,
**caractérisé en ce que**
l'élément capteur comprend une jauge de contrainte (10).

3. Banc d'essai selon la revendication 1 ou 2,
**caractérisé en ce que**
le capteur de contrainte présente un diamètre de 20 mm au maximum.

4. Banc d'essai selon l'une des revendications précédentes,
**caractérisé en ce que**
une autre information supplémentaire concerne un état de commutation, une température, une vitesse, des données de position, un signal radar, un temps, une tension, un courant et/ou des données supplémentaires de force et/ou de poids.

5. Banc d'essai selon l'une des revendications précédentes,
**caractérisé en ce que**
au moins une entrée de données (14), de préférence plusieurs entrées de données (14), pour l'information supplémentaire est/sont prévue(s) sur le capteur de contrainte.

6. Banc d'essai selon l'une des revendications précédentes,
**caractérisé en ce que**
le capteur de contrainte comprend une sortie de données commune (16) pour les forces mesurées et pour des données supplémentaires basées sur l'information supplémentaire.

7. Banc d'essai selon l'une des revendications précédentes,
**caractérisé en ce que**
le dispositif d'évaluation (12) détermine des paramètres à partir des forces mesurées et de l'information supplémentaire.

8. Banc d'essai selon l'une des revendications précédentes,
**caractérisé en ce que**
le dispositif d'évaluation (12) détermine des paramètres à partir de plusieurs informations supplémentaires.

9. Banc d'essai selon l'une des revendications précédentes,
**caractérisé en ce que**
il est prévu un dispositif de commande (18) dans le capteur de contrainte.

10. Utilisation d'un capteur de contrainte dans un banc d'essai pour véhicules automobiles, permettant de mesurer les forces qui agissent sur les surfaces de contact au sol des pneus pendant l'accélération et le freinage, comportant au moins un élément capteur (10) pour mesurer les forces, et un dispositif d'évaluation (12) pour évaluer les forces mesurées et au moins une information supplémentaire,
le banc d'essai comprenant un rouleau d'essai et un capteur de patinage et/ou un tachymètre disposé sur le rouleau d'essai, l'information supplémentaire concernant un signal de patinage du capteur de patinage et/ou une vitesse de rotation du tachymètre,
le dispositif d'évaluation (12) étant intégré dans le capteur de contrainte, et le capteur de contrainte étant réalisé sous la forme d'un nœud de capteur d'un réseau de capteurs de plusieurs nœuds de capteur interconnectés.

11. Procédé de détermination, d'évaluation et/ou de transmission d'informations dans un banc d'essai selon l'une des revendications 1 à 9.
